# DEMANDE DE BREVET EUROPEEN

(11) **EP 1 717 883 A1**
(43) Date de publication de la demande: **02.11.2006**
(21) Numéro de dépôt: 06300233.1
(22) Date de dépôt: 15.03.2006
(51) Int. Cl.: H01M 2/10, B60K 1/04

(54) **Dispositif d'arrimage de batterie comprenant un socle et une bride**

(30) Priorité: 24.03.2005 FR 0502926
(71) Demandeur: PEUGEOT CITROËN AUTOMOBILES S.A., 78140 Velizy Villacoublay (FR)
(72) Inventeur: Denoeud, Jean-François, 75020 Paris (FR)
(74) Mandataire: Couillard, Yann Luc Raymond

(57) **Abrégé**

L'invention concerne un dispositif d'arrimage de batterie incluant un socle sur lequel repose cette batterie, et une bride venant en appui sur cette batterie pour la maintenir en position dans le socle.

Selon l'invention, la bride, qui comprend une première et une seconde extrémités de fixation (17, 18) a sa première extrémité (17) qui est solidarisée au socle par encliquetage.

L'invention s'applique notamment à l'intégration d'une batterie de véhicule au niveau d'un coffre arrière de véhicule automobile.

## Description

L'invention concerne un dispositif d'arrimage de batterie de véhicule automobile, comprenant un socle et une bride appuyant sur la batterie pour la maintenir en position dans le socle, cette bride ayant une première et une seconde extrémités de fixation.

Avec un tel dispositif, le changement de batterie nécessite de démonter la bride pour retirer la batterie, de placer une nouvelle batterie sur le socle, et de remonter la bride. Cette opération nécessite ainsi d'accéder aux deux extrémités de la bride afin de la démonter et de la remonter.

La bride appuie généralement soit sur une face supérieure horizontale de la batterie, soit sur une face frontale verticale de cette batterie, en ayant chacune de ses extrémités qui dépasse dans une zone correspondant à une face latérale correspondante de la batterie.

Lorsque la batterie est montée à proximité du bloc moteur du véhicule, les faces supérieure, frontale et latérales de la batterie sont suffisamment accessibles pour permettre à un opérateur d'accéder aux extrémités de la bride afin de la monter ou de la démonter.

Mais une telle batterie peut aussi être placée dans une zone moins accessible, en étant par exemple située derrière une ouverture réalisée dans un panneau de tôlerie, cette ouverture étant dimensionnée seulement pour permettre le passage de la batterie.

Dans ce cas, la batterie a par exemple une face frontale qui est accessible car elle est située en regard et en retrait de l'ouverture, mais l'accessibilité aux faces latérales, voire à la face supérieure est très limitée. Il est alors très malaisé d'accéder aux extrémités de la bride pour la démonter ou pour la remonter lorsque la batterie doit être changée.

Le but de l'invention est de remédier à ces inconvénients.

A cet effet, l'invention a pour objet un dispositif d'arrimage de batterie de véhicule automobile, comprenant un socle et une bride appuyant sur la batterie pour la maintenir en position dans le socle, cette bride ayant une première et une seconde extrémités de fixation, caractérisé en ce que la première extrémité de la bride est solidarisée au socle par encliquetage.

La bride peut ainsi être montée et démontée en accédant à une seule de ses extrémités, puisqu'une de ses extrémités peut être solidarisée au socle simplement en manipulant la bride sans accéder nécessairement à la zone de fixation de cette extrémité.

Selon une caractéristique de l'invention, la seconde extrémité est percée d'un trou et est solidarisée au socle par une vis traversant ce trou et se vissant dans le socle.

Selon une autre caractéristique de l'invention, une ouverture est réalisée dans le socle, cette ouverture étant destinée à recevoir la première extrémité de la bride.

Selon une autre caractéristique de l'invention, la première extrémité de la bride a une forme sensiblement rectangulaire comprenant une encoche apte à s'engager sur un bord de l'ouverture après engagement de la première extrémité dans l'ouverture pour immobiliser la bride.

Selon une autre caractéristique de l'invention, l'ouverture comprend un premier bord ayant une longueur correspondant à la largeur de la première extrémité de la bride, et un second bord ayant une longueur correspondant à la largeur de la première extrémité de bride au niveau de l'encoche.

Selon une autre caractéristique de l'invention, le socle a une base sensiblement rectangulaire, l'un des côtés de ce socle comprenant un rebord, et dans lequel la bride s'étend le long du côté de la base qui est opposé au rebord, pour maintenir la batterie en appui contre ce rebord.

L'invention sera maintenant décrite plus en détail, et en référence aux dessins annexés qui en illustrent une forme de réalisation à titre d'exemple non limitatif.
La figure 1 représente une batterie montée dans un renfoncement situé derrière une ouverture d'un panneau de tôle ;
La figure 2 représente une batterie montée dans un dispositif d'arrimage selon l'invention ;
La figure 3 représente le dispositif d'encliquetage de la bride du dispositif selon l'invention ;
La figure 4 montre une première étape de montage de la bride dans le support ;
La figure 5 montre une seconde étape de montage de la bride dans le support ;
La figure 6 montre une troisième étape de montage de la bride dans le support ;
La figure 7 représente une garniture derrière laquelle est montée une batterie dans un dispositif selon l'invention ;
La figure 8 montre la batterie qui est montée derrière la garniture de la figure 7 ;
La figure 9 montre le support selon l'invention dans lequel est montée la batterie représentée figure 8.

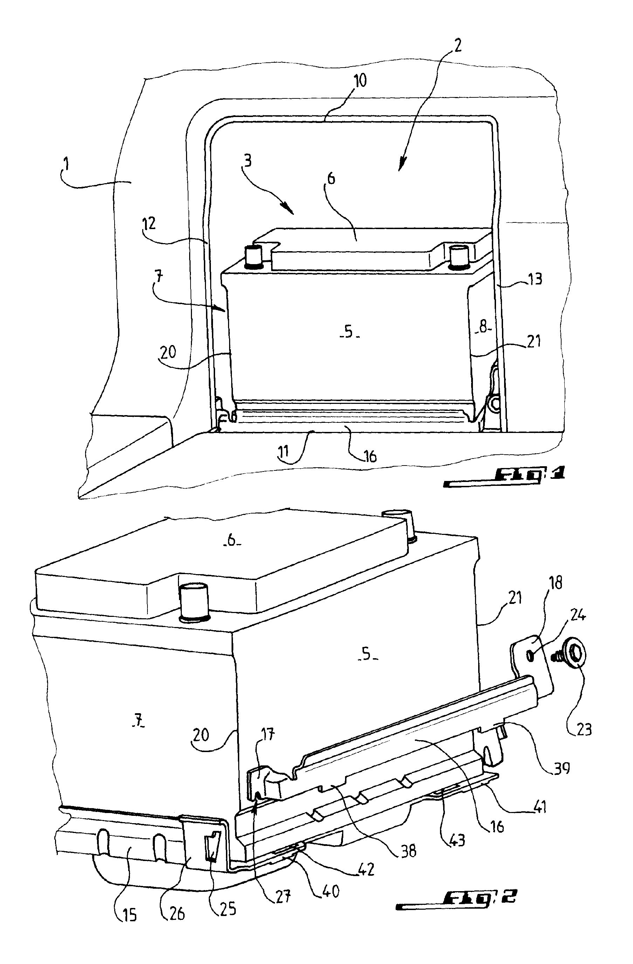

La figure 1 montre une face latérale intérieure d'un coffre de véhicule automobile qui est couverte d'une garniture 1. Une ouverture 2 de forme rectangulaire permet le passage d'une batterie 3 qui est montée en arrière de cette ouverture. L'ouverture 2 est réalisée dans la garniture et dans un panneau de tôle non visible sur la figure 1, car il est couvert par cette garniture.

La batterie 3 qui a une forme générale parallélépipédique comprend une face frontale 5, verticale, située en regard de l'ouverture 2 ; une face supérieure 6, horizontale ; une première face latérale 7, verticale ; et une seconde face latérale 8 qui est également verticale.

L'ouverture 2 qui a une forme généralement rectangulaire, comprend un bord supérieur 10 horizontal ; un bord inférieur 11, horizontal ; un premier bord vertical 12 ; et un second bord vertical 13. Ces bords sont ainsi parallèles respectivement à la face supérieure, à la face inférieure, à la première face latérale, et à la seconde face latérale de la batterie.

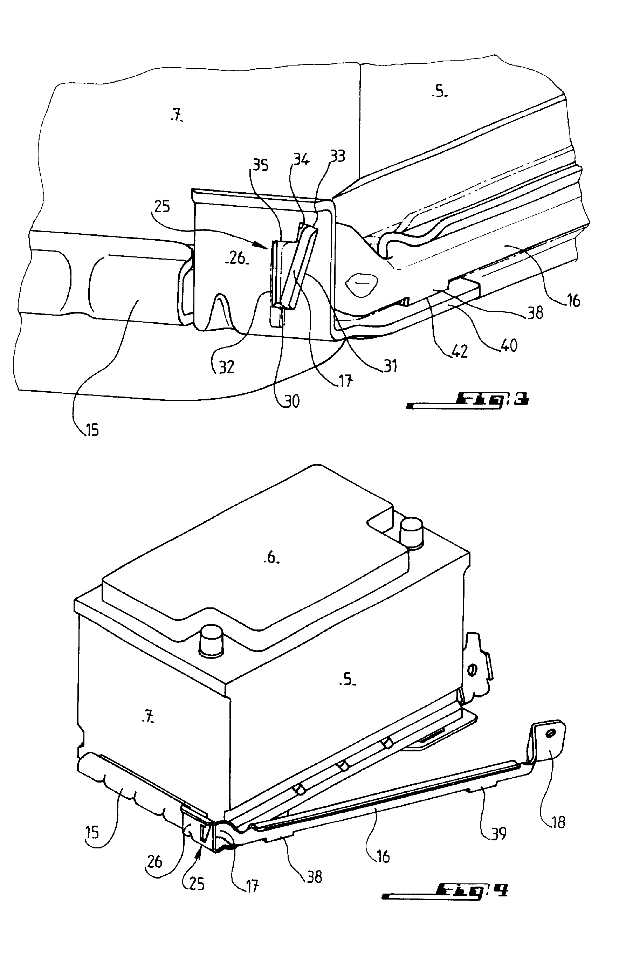

Cette batterie 3 est posée sur un socle 15, visible figure 2, en étant maintenue par une bride 16, ce socle 15 ayant une forme générale rectangulaire prévue pour recevoir la face inférieure de la batterie. Cette base rectangulaire comprend un rebord arrière non visible sur la figure 2, contre lequel appuie une zone proche de l'arête inférieure de la face arrière de la batterie. La bride 16 s'étend le long d'un côté du socle qui est le côté opposé au rebord arrière, et elle exerce dans une partie basse de la face frontale 5 de la batterie un effort horizontal, tendant à maintenir cette batterie 3 en appui contre le rebord arrière du socle 15.

Comme visible figure 2, la bride 16 longe la face frontale 5, tout en ayant une longueur supérieure à celle de cette face frontale 5. Cette bride comprend une première extrémité 17 qui dépasse au-delà d'une première arête verticale 20 définie par la face frontale 5 et la première face latérale 7 de la batterie, ainsi qu'une seconde extrémité 18 qui dépasse au-delà d'une seconde arête verticale 21 qui est définie par la face frontale 5 et par la seconde face latérale 8 de la batterie.

La première et la seconde extrémité 17 et 18 qui dépassent de la batterie sont amoviblement fixées au socle 15 de façon à permettre le montage et le démontage ce cette bride 16.

Comme visible figure 1, l'ouverture 2 est à peine plus large que la batterie 3, c'est-à-dire que la distance séparant le premier bord vertical 12 du second bord vertical 13 est à peine supérieure à la longueur de la batterie, à savoir la distance séparant la première arête 20 de la seconde arête 21.

Dans l'exemple des figures, la batterie 3 et son socle 15 sont décalés vers l'arrière pour que la distance qui sépare la première arête 20 de la batterie, du premier bord vertical 12 de l'ouverture soit inférieure à la distance qui sépare la seconde arête 21, du second bord vertical 13.

Ce léger décalage de la batterie 3 vers l'arrière par rapport à l'ouverture 2 permet de favoriser l'accessibilité de la seconde extrémité 18 de la bride, qui est accessible par l'espace séparant la seconde arête 21 et le second bord vertical 13 de l'ouverture.

Selon l'invention, le dispositif comprend des moyens permettant la fixation de la première extrémité 17 de la bride à son socle 15 par encliquetage, et des moyens permettant la fixation de la seconde extrémité 18 par vissage. Le montage de la bride consiste ainsi seulement à encliqueter sa première extrémité 17 dans le socle 15, et à fixer sa seconde extrémité par des moyens de fixation classiques qui comprennent ici une vis 23 destinée à s'engager dans un trou correspondant 24 de la seconde extrémité 18, cette vis venant se visser dans une zone correspondante du socle 15.

Cette bride 16 peut ainsi être montée et démontée sans qu'il soit nécessaire d'accéder à sa première extrémité, de sorte que la batterie peut être intégrée dans un espace plus réduit du véhicule afin de gagner de l'espace.

Dans l'exemple des figures, la distance séparant le premier bord 12 de l'ouverture, de la première arête verticale 20, le long d'un axe longitudinal du véhicule, est sensiblement nulle, puisqu'il n'est pas nécessaire d'accéder à la première extrémité de la bride pour la monter.

Comme visible figure 2, l'encliquetage de la première extrémité de bride 17 dans le socle est assuré principalement par une ouverture 25 réalisée dans une patte 26 du socle 15, cette ouverture étant destinée à recevoir la première extrémité de bride 17.

La patte 26 est située au niveau d'un angle de la base rectangulaire du socle 15, qui coïncide avec l'arête 20, cette patte 26 s'étendant selon un plan vertical orienté transversalement par rapport au véhicule.

La première extrémité de bride 17 a une forme de languette plate à contour sensiblement rectangulaire de manière à pouvoir s'insérer dans l'ouverture 25 selon un mouvement longitudinal.

Afin d'assurer l'immobilisation longitudinale de la bride, la première extrémité 17 comprend une encoche 27 qui s'ouvre sur un bord inférieur de cette extrémité de bride 17. Cette encoche 27 s'engage sur un bord inférieur de l'ouverture 25 pour le chevaucher afin d'immobiliser la bride 16 longitudinalement lorsque celle-ci est encliquetée dans l'ouverture 25.

L'ouverture 25 a un contour polygonal à six côtés, qui comprend un côté formant base, repéré par 30, prolongé par un premier côté et un second côté repérés par 31 et 32, ces premier et second côtés ayant leurs extrémités supérieures réunies par trois côtés contigus repérés par 33, 34 et 35.

Le côté 30 formant base a une longueur qui est de l'ordre de l'épaisseur de l'extrémité 17 de la bride 16, et qui vaut ici le double de cette épaisseur. Le premier côté 31 a une longueur qui correspond à la largeur ou hauteur de l'extrémité rectangulaire 17 pour que cette extrémité 17 puisse être introduite dans l'ouverture 25 en longeant ce premier côté.

Le second côté 32 a une longueur qui est inférieure à celle du premier côté 31, et qui correspond à la largeur de l'extrémité 17 au niveau de l'encoche. La longueur de ce second côté 32 correspond ainsi à la largeur de l'extrémité 17 diminuée de la profondeur de l'encoche 27.

Comme représenté sur les figures, le second côté 32 est sensiblement vertical, et le premier côté forme un léger angle ouvert vers le haut par rapport à ce premier côté, de sorte que l'ouverture 25 a une forme générale d'un secteur angulaire s'ouvrant vers le haut, et dont le sommet qui est orienté vers le bas est tronqué par le côté formant base repéré par 30.

Le premier côté 31 a son extrémité supérieure prolongée par le côté 33 qui définit avec ce premier côté un angle droit. De manière analogue, le second côté 32 a son extrémité supérieure prolongée par le côté repéré par 35 qui définit un angle droit avec le second côté.

Les côtés 33 et 35 ont chacun une longueur qui vaut sensiblement celle du côté formant base 30, et ils sont réunis l'un à l'autre par le côté 34 qui s'étend parallèlement au premier côté 31.

L'extrémité 17 peut ainsi être engagée dans l'ouverture en longeant le premier bord 31. L'encoche 27 peut ensuite être enfoncée sur le côté 30 formant base pour le chevaucher de manière à immobiliser la bride longitudinalement. Ensuite, la première extrémité 17 peut être ramenée contre le second côté 32 de l'ouverture de manière à être complètement encliquetée.

Dans cette position encliquetée, la première extrémité 17 est en appui contre le second bord 32, et elle est immobilisée verticalement vers le bas par le bord formant base 30 sur lequel appuie le fond d'encoche, puis elle est immobilisée vers le haut par le côté 35 qui prolonge, à angle droit, l'extrémité supérieure du second bord 32.

Afin d'assurer un positionnement optimal de la bride 16, celle-ci est aussi munie d'une première languette 38 s'étendant vers le bas et située à proximité de la première extrémité 17, et d'une seconde languette 39 similaire à la première, mais située à proximité de la seconde extrémité 18 de bride.

Le socle 15 comprend une première et une seconde pattes correspondantes repérées par 40 et 41 incluant chacune une ouverture correspondante 42 et 43. Les deux pattes 40 et 41 dépassent du bord frontal du socle 15 en étant situées au droit respectivement des languettes 38 et 39.

Chaque ouverture 42, 43 a une forme rectangulaire correspondant à la section de la languette 38, 39 qu'elle est destinée à recevoir.

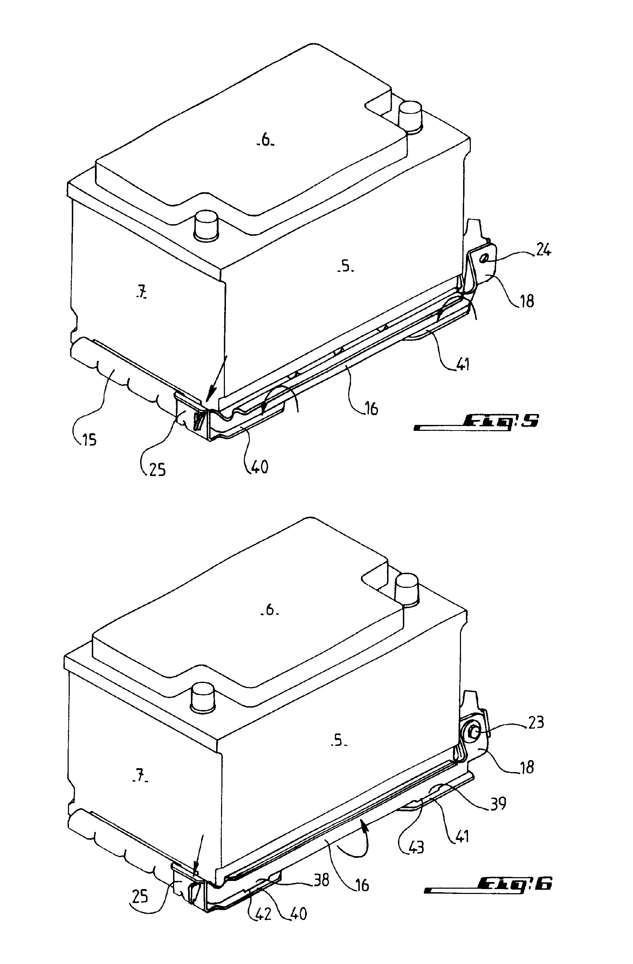

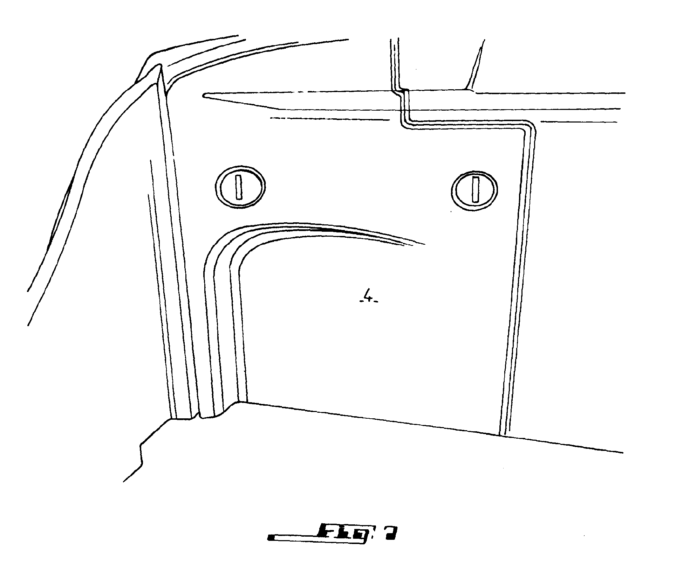

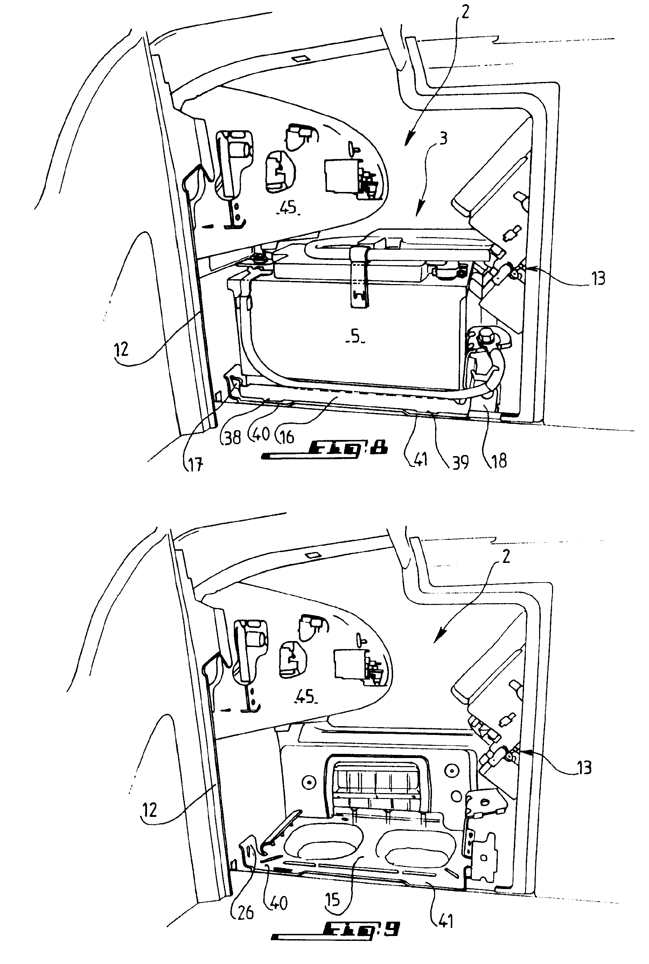

Comme représenté sur les figures 4 à 6, le montage de la bride 16 consiste d'abord à engager l'extrémité 17 dans l'ouverture 25, en lui faisant longer le premier bord 31 de cette ouverture, ce qui correspond à la figure 4. La bride est ensuite rabattue le long de la face frontale dans un mouvement de pivotement autour d'un axe vertical passant par son extrémité 17.

Après quoi les languettes 38 et 39 sont insérées dans les ouvertures correspondantes 42 et 43 des pattes 40 et 41 dans un mouvement d'engagement sensiblement vertical, ce qui correspond à la figure 5. L'engagement des languettes dans leurs ouvertures correspond également à l'engagement de l'encoche 27 sur le côté formant base 30.

Après cet engagement, la bride 16 est rabattue contre la face frontale 5 de la batterie, ce qui correspond à un mouvement de basculement, ou de rotation de la bride autour d'un axe passant par les deux ouvertures 42 et 43. Ce mouvement de rotation permet de ramener l'extrémité 17 depuis le premier bord 31 contre le second bord 32 de l'ouverture, et par là même d'immobiliser la bride verticalement.

La seconde extrémité est ensuite fixée en engageant une vis 23 dans le trou repéré par 24 pour la visser dans une partie correspondante du socle 15. Comme visible sur les figures, la seconde extrémité 18 qui est sensiblement plane vient en appui contre une autre patte du socle, cette autre patte étant également sensiblement plane.

La vis 23 est vissée dans cette autre patte pour que le serrage de cette vis 23 positionne la bride 16 angulairement autour de son axe longitudinal. La bride 16 est ainsi maintenue en appui contre le second bord 32 dans l'ouverture 25, ce qui assure que la première extrémité 17 de la bride reste encliquetée dès que la vis 23 est serrée.

Les figures 7 à 9 illustrent un autre exemple d'implantation de batterie dans un espace restreint, grâce à l'invention. Dans cet autre exemple, la batterie 3 est également placée en regard d'une ouverture 2 de forme sensiblement rectangulaire, comprenant deux bords verticaux 12 et 13, et fermée par un panneau 4.

Dans cet autre exemple, la batterie est implantée dans un espace qui comprend également les éléments d'un feu arrière du véhicule, repérés par 45, ce feu arrière surplombant la face supérieure 6 de la batterie, ce qui limite encore l'accès à cette batterie et à la bride.

## Revendications

1. Dispositif d'arrimage de batterie (3) de véhicule automobile, comprenant un socle (15) et une bride (16) appuyant sur la batterie (3) pour la maintenir en position dans le socle (15), cette bride (16) ayant une première et une seconde extrémités (17, 18) de fixation, **caractérisé en ce que** la première extrémité (17) de la bride (16) est solidarisée au socle (15) par encliquetage.

2. Dispositif selon la revendication 1, dans lequel la seconde extrémité (18) est percée d'un trou (24) et est solidarisée au socle (15) par une vis (23) traversant ce trou (24) et se vissant dans le socle (15).

3. Dispositif selon l'une des revendications précédentes, comprenant une ouverture (25) réalisée dans le socle (15), cette ouverture (25) étant destinée à recevoir la première extrémité (17) de la bride (16).

4. Dispositif selon la revendication 3, dans lequel la première extrémité (17) de la bride (16) a une forme sensiblement rectangulaire comprenant une encoche (27) apte à s'engager sur un bord (30) de l'ouverture (25) après engagement de la première extrémité (17) dans l'ouverture (25) pour immobiliser la bride (16).

5. Dispositif selon la revendication 4, dans lequel l'ouverture (25) comprend un premier bord (31) ayant une longueur correspondant à la largeur de la première extrémité (17) de la bride (16), et un second bord (32) ayant une longueur correspondant à la largeur de la première extrémité (17) de bride au niveau de l'encoche (27).

6. Dispositif selon l'une des revendications précédentes, dans lequel le socle (15) a une base sensiblement rectangulaire, l'un des côtés de ce socle comprenant un rebord, et dans lequel la bride (16) s'étend le long du côté de la base qui est opposé au rebord, pour maintenir la batterie (3) en appui contre ce rebord.
